(19) **Europäisches Patentamt**

**European Patent Office**

**Office européen des brevets**

(11) Numéro de publication : **0 025 947**
**B1**

(12) FASCICULE DE BREVET EUROPÉEN

(45) Date de publication du fascicule du brevet :
26.10.83

(51) Int. Cl.³ : **H 02 G   5/06, H 04 Q   1/02**

(21) Numéro de dépôt : **80105455.2**

(22) Date de dépôt : **12.09.80**

(54) **Barre de distribution d'énergie électrique.**

(30) Priorité : **19.09.79 FR 7923305**

(43) Date de publication de la demande :
**01.04.81 Bulletin 81/13**

(45) Mention de la délivrance du brevet :
**26.10.83 Bulletin 83/43**

(84) Etats contractants désignés :
**BE DE GB IT LU NL SE**

(56) Documents cités :
**DE A 2 515 687**
**FR A 2 097 573**
**FR A 2 349 984**

(73) Titulaire : **COMPAGNIE INDUSTRIELLE DES TELE-
COMMUNICATIONS CIT-ALCATEL S.A. dite:
12, rue de la Baume
F-75008 Paris (FR)**

(72) Inventeur : **Petit, André
123 bis, rue de la Division Leclerc
F-91160 Saulx Les Chartreux (FR)**

(74) Mandataire : **Weinmiller, Jürgen et al
Zeppelinstrasse 63
D-8000 München 80 (DE)**

Jouve, 18, rue St-Denis, 75001 Paris, France

Barre de distribution d'énergie électrique

La présente invention concerne une barre de distribution d'énergie électrique pour bâti d'équipements et en particulier d'équipements de télécommunications.

Les barres de distribution connues ne permettent pas la connexion et la déconnexion rapide des châssis du bâti, et la réalisation d'un grand nombre de combinaisons d'utilisation. L'invention permet de pallier ces inconvénients et elle propose une barre de faible encombrement et d'accès aisé, qui soit d'un coût réduit tant en matériel qu'en temps d'installation et d'intervention.

La présente invention a donc pour objet une barre de distribution d'énergie électrique pour bâti d'équipements comportant une enveloppe isolante, morcelée, située dans un contenant, ainsi que des étirés conducteurs électriques, qui sont disposés dans l'enveloppe de manière à être électriquement isolés les uns des autres et à permettre à leurs lames de connexion, également isolées les unes des autres, de sortir du contenant dans un seul plan parallèle aux étirés, ladite barre étant caractérisée en ce qu'elle comporte un contenant constitué de deux bandes métalliques soudées entre elles sur un de leur grand côté et sur une certaine largeur et écartées entre elles sur le reste de leur largeur de façon à former un fourreau de blindage plat, en ce que les étirés conducteurs électriques sont insérés dans des mortaises longitudinales ménagées dans les faces en regard de deux profilés en matière plastique qui sont placés entre les bandes métalliques là où elles sont écartées et en ce qu'un isolant, muni de fenêtres au droit des connexions entre les étirés et leurs lames de connexion respectives, est inséré entre les lames de connexion des étirés situés dans un profilé, et ce profilé.

Selon une réalisation particulièrement avantageuse de l'invention, un moulage isolant, placé sur l'extrémité non soudée du blindage, protège et positionne les languettes des lames.

Avantageusement la partie soudée dudit blindage comporte des échancrures en forme de crochet destinées à coopérer avec des décolletages saillants disposés sur le bâti de manière à assurer la fixation de ladite barre sur le bâti.

L'invention sera mieux comprise à la lumière de la description d'un exemple de réalisation de l'invention faite ci-après en regard du dessin annexé dans lequel :

La figure 1 donne une vue partielle en perspective arrachée d'une barre de distribution selon l'invention.

La figure 2 donne une vue simplifiée de dessus de la barre de distribution selon la figure 1.

La figure 3 montre le détail A de la figure 2.

La figure 4 montre le détail B de la figure 2.

La figure 5 montre le positionnement et l'accrochage de la barre de distribution, selon la figure 1, sur un bâti.

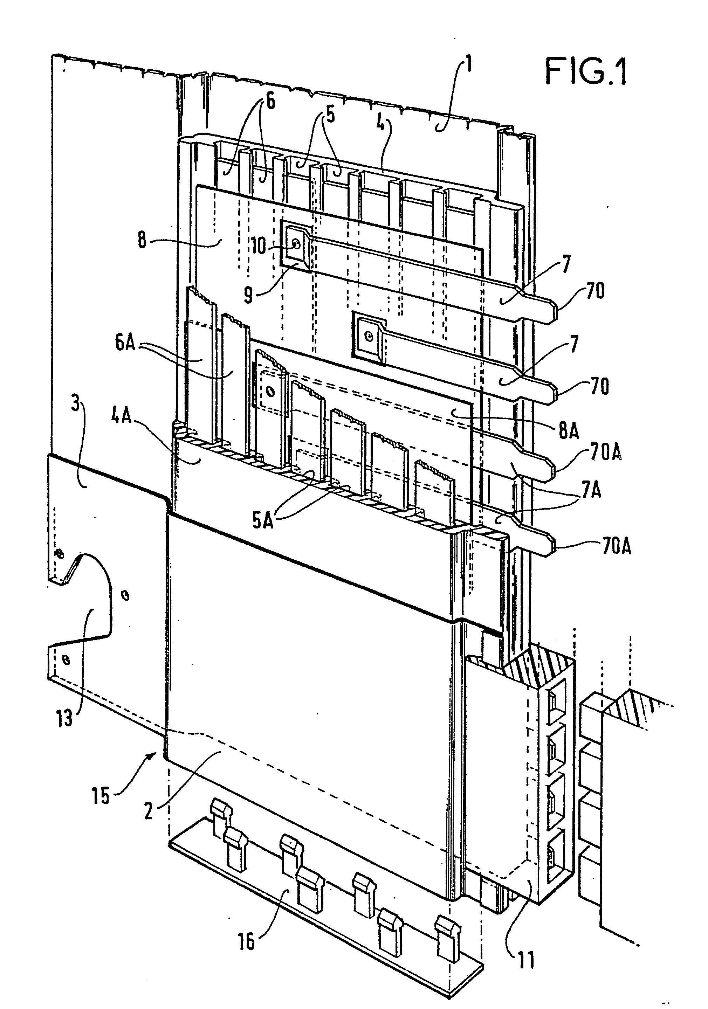

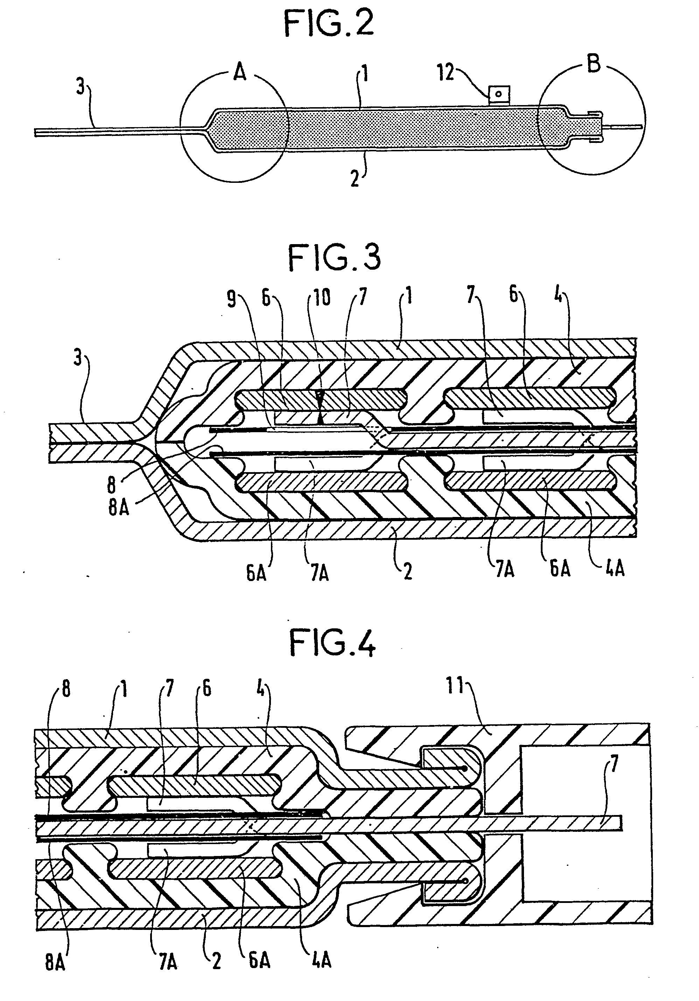

En se référant maintenant à la figure 1, la barre 15 de distribution comprend un contenant métallique extérieur, constitué de deux bandes 1 et 2 en acier inoxydable, formant un fourreau blindé. Ces deux bandes sont soudées entre elles en 3 sur un de leur grand côté, lequel a été déporté de façon à former une sorte de fourreau très plat comme on le voit bien figure 2.

A l'intérieur du fourreau, constitué par les bandes métalliques 1 et 2, sont placés deux profilés 4 et 4A en matière plastique qui sont maintenus en place par les replis longitudinaux des bandes métalliques 1. Les profilés 4 et 4A possèdent des mortaises longitudinales 5, 5A. Les mortaises sont pratiquées dans les faces des profilés 4 et 4A en regard l'une de l'autre. Un étiré d'alliage cuivreux 6, (6A) est logé dans chaque mortaise 5 (5A). Les étirés 6, (6A) ont une section convenable pour véhiculer les courants d'alimentation sous faible impédance.

Sur chaque étiré 6, (6A) et perpendiculairement à lui sont soudées des lames 7 (7A) régulièrement réparties le long de l'étiré. Sur la figure 1, une seule lame 7 a été représentée sur le troisième étiré 6 en partant de la gauche et une seule également sur le cinquième étiré 6 en partant de la gauche. De même une seule lame 7A a été représentée sur le troisième étiré 6A en partant de la gauche et sur le quatrième étiré 6A en partant de la gauche. Cependant tous les étirés reçoivent des lames. Le pas entre deux lames 7, (7A) d'un même étiré correspond à ce qui est nécessaire pour placer entre ces deux lames, une lame de tous les autres étirés. Les lames 7A sont imbriquées avec les lames 7. Un isolant 8, (8A) est disposé entre le profilé 4 (4A) et les lames 7 (7A). Cet isolant possède des fenêtres 9 pour le passage des lames.

En se reportant aux figures 3 et 4 on voit comment les lames 7 (7A) sont agencées de manière à sortir toutes dans un même plan. En 10 figure 3 est représenté un point de soudure liant une lame 7 à un profilé 6. L'extrémité libre de toutes les lames 7, 7A est située sur une même ligne. Cette extrémité comme on le voit sur la figure 1 est façonnée en forme de languette 70, (70A) de manière à recevoir des connecteurs à pinces.

On peut, bien entendu, regrouper par séries toutes ces lames et chaque série peut être contenue dans un moulage isolant tel que 11 (figure 1). Chaque moulage 11 est fixé sur les grands côtés, non soudés des bandes métalliques 1, 2 et il assure la protection et le positionnement des languettes 70, (70A) des lames telles que 7, (7A). Ce moulage peut être muni d'un repérage des trous c'est-à-dire des lames 7, (7A) et on peut prévoir un détrompage entre les moulages.

Une languette 12 (figure 2) est soudée au fourreau pour le raccordement au potentiel de la terre ou à la masse mécanique.

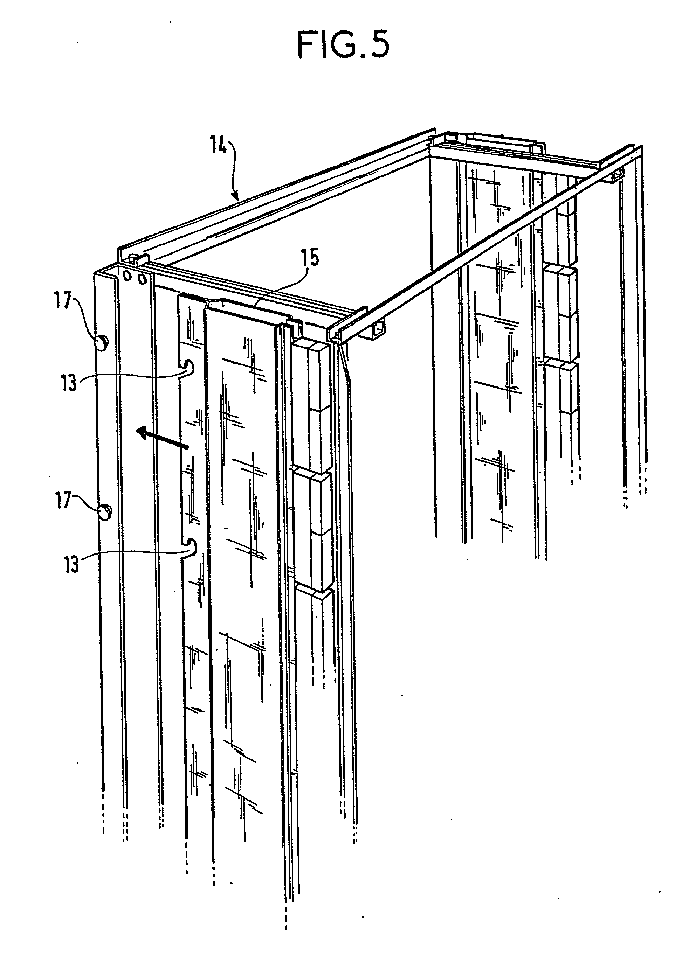

La partie soudée 3 du contenant métallique comporte comme on le voit figure 1 des échancrures telle que 13 pour l'accrochage de la barre 15 sur des décolletages saillants tels que 17 prévus sur le bâti 14 comme on le voit sur la figure 5.

La barre de distribution selon l'invention occupe un encombrement réduit et elle permet la connexion et la déconnexion rapides des circuits d'alimentation, de la barre et des châssis. Elle permet la possibilité de distribuer l'énergie à des circuits d'alimentation de secours indépendants. Elle permet plusieurs combinaisons d'utilisation. Son montage est rapide, elle est économique de par sa conception. Elle constitue un écran électrostatique entre les câblages de deux bâtis contigus.

L'identité des lames 7, (7A) permet indifféremment l'arrivée ou le départ des tensions d'alimentation. De ce fait le point d'amenée des différentes tensions sur la barre d'alimentation peut être situé à n'importe quel niveau de celle-ci.

Chaque extrémité de lame 7, (7A) non raccordée est protégée par un moulage amovible. Ce même moulage 16 est utilisé pour obturer les extrémités inférieure et supérieure de la barre d'alimentation.

## Revendications

1. Barre de distribution d'énergie électrique (15) pour bâti d'équipements (14), comportant une enveloppe isolante, morcelée, située dans un contenant, ainsi que des étirés conducteurs électriques (6, 6A) qui sont disposés dans l'enveloppe de manière à être électriquement isolés les uns des autres et à permettre à leurs lames de connexion (7, 7A), également isolées les unes des autres, de sortir du contenant dans un seul plan parallèle aux étirés, ladite barre (15) étant caractérisée en ce qu'elle comporte un contenant constitué par deux bandes métalliques (1, 2) soudées entre elles sur un de leur grand côté et sur une certaine largeur et écartées entre elles sur le reste de la largeur de façon à former un fourreau de blindage plat, en ce que les étirés conducteurs électriques (6, 6A) sont insérés dans des mortaises longitudinales (5, 5A) ménagées dans les faces en regard de deux profilés (4, 4A) en matière plastique qui forment l'enveloppe isolante et qui sont placés entre les bandes métalliques là où elles sont écartées et en ce qu'un isolant (8 ou 8A), muni de fenêtres (9) au droit des connexions entre les étirés (6 ou 6A) et leurs lames de connexion respectives (7 ou 7A), est inséré entre les lames de connexion (7 ou 7A) des étirés (6 ou 6A) situés dans un profilé (4 ou 4A), et ce profilé.

2. Barre de distribution d'énergie électrique (15) selon la revendication 1, caractérisée en ce qu'elle comporte au moins un moulage isolant (11) de positionnement et de protection des languettes (70, 70A) des lames de connexion (7, 7A), moulage qui est placé sur les grands côtés non soudés des bandes métalliques (1, 2).

3. Barre de distribution d'énergie électrique (15) selon la revendication 1 ou 2, caractérisée en ce que la partie soudée (3) des bandes métalliques (1, 2) comporte des échancrures (13), en forme de crochets, destinées à coopérer avec des décolletages saillants (17) disposés sur le bâti d'équipement (14) pour assurer la fixation de la barre (15) au bâti.

## Claims

1. A bar (15) for the distribution of electrical energy in an equipment frame (14), comprising an insulating cover which is cut up into pieces and which is situated in a container, and comprising electrical conductor rods (6, 6A) which are disposed inside the cover in such a way that they are electrically insulated one from the others and that their connection strips (7, 7A) which are also insulated one from the others are allowed to project out of the container in only one plane which is parallel to the rods, said bar being characterized in that it comprises a container which is constituted by two metal bands (1, 2), these bands being welded together along one of their large sides and over a certain width and being distanced from one another over the remaining width in order to constitute a protection sheath, that the electrical conductor rods (6, 6A) are inserted into longitudinal slots (5, 5A) which are provided in opposite surfaces of two plastics sections (4, 4A) constituting the insulating cover and disposed between the metal bands in their distanced area, and that an insulating member (8 or 8A) which is provided with windows (9) opposite to the connection area between the rods (6 or 6A) and their respective connection strips (7 or 7A), is inserted between the connection strips (7 or 7A) of the rods (6 or 6A) situated in a plastics section (4 or 4A) and that section.

2. A bar (15) for the distribution of electrical energy according to claim 1, characterized in that it comprises at least an insulating cast piece (11) for positioning and protecting the tongues (70, 70A) of the connection strips (7, 7A) which piece is placed at the large metal band (1, 2) sides which are not welded.

3. A bar (15) for the distribution of electrical energy according to claim 1 or 2, characterized in that the welded part (3) of the metal bands (1, 2) comprises hook-shaped notches (13) which are intended to cooperate with projecting cut-outs (17) disposed at the equipment frame (14) in order to ensure the fixing of the bar (15) to the frame.

## Ansprüche

1. Verteilerschiene (15) für elektrische Energie in einem Anlagenschrank (14), mit einer in Stücke aufgeteilten und in einem Gehäuse befindlichen Isolierhülle und mit elektrischen Leiterstäben (6, 6A), die in der Hülle so angeordnet sind, daß sie gegeneinander elektrisch isoliert sind und daß ihre Verbindungslamellen (7, 7A), die ebenfalls gegeneinander isoliert sind, in einer einzigen zu den Stäben parallelen Ebene aus der Hülle hervorragen, wobei die Schiene (15) dadurch gekennzeichnet ist, daß sie ein Gehäuse enthält, das aus zwei Metallbändern (1, 2) besteht, welche entlang einer ihrer großen Kanten und über eine gewisse Breite hinweg miteinander verschweißt und für die restliche Breite zueinander in Abstand angeordnet sind derart, daß sie eine flache Abschirmscheide bilden, daß die elektrischen Leiterstäbe (6, 6A) in Längsnuten (5, 5A) eingefügt sind, die in den zugewandten Flächen zweier Kunststoffprofilkörper (4, 4A) angebracht sind, die die Isolierhülle bilden und zwischen den Metallbändern in dem Bereich, in dem sie einen Abstand aufweisen, angeordnet sind, und daß eine Isolierschicht (8 oder 8A), die gegenüber den Verbindungszonen zwischen den Stäben (6 oder 6A) und ihren zugeordneten Verbindungslamellen (7 oder 7A) Fenster (9) besitzt, zwischen die Verbindungslamellen (7 oder 7A) der in einem Profilkörper (4 oder 4A) befindlichen Stäbe (6 oder 6A) und diesen Profilkörper eingefügt ist.

2. Verteilerschiene (15) für elektrische Energie nach Anspruch 1, dadurch gekennzeichnet, daß sie mindestens ein Kunststofformstück (11) zur Ausrichtung und zum Schutz der Zungen (70, 70A) der Verbindungslamellen (7, 7A) aufweist, das entlang der nicht verschweißten großen Kanten der Metallbänder (1, 2) angebracht ist.

3. Verteilerschiene (15) für elektrische Energie nach Anspruch 1 oder 2, dadurch gekennzeichnet, daß der verschweißte Bereich (3) der Metallbänder (1, 2) hakenförmige Ausschnitte (13) aufweist, die dazu bestimmt sind, mit am Anlagenschrank (14) befindlichen Vorsprüngen (17) zur Befestigung der Schiene (15) am Schrankgerüst zusammenzuwirken.

FIG.1

# FIG.2

# FIG.3

# FIG.4

# FIG.5